# FASCICULE DE BREVET EUROPEEN

(11) **EP 1 369 639 B1**
(45) Date de publication et mention de la délivrance du brevet: **14.12.2005**
(21) Numéro de dépôt: 03291254.5
(22) Date de dépôt: 26.05.2003
(51) Int. Cl.: F21V 7/00, F21S 8/10

(54) **Projecteur d'éclairage elliptique comportant une source lumineuse secondaire**
Kfz-Scheinwerfer nach dem Projektionsprinzip mit einer sekundären Lichtquelle
Vehicle headlamp of the projection type comprising a secondary light source

(30) Priorité: 04.06.2002 FR 0206927
(43) Date de publication de la demande: 10.12.2003
(73) Titulaire: VALEO VISION, 93012 Bobigny Cédex (FR)
(72) Inventeur: Albou, Pierre, 75013 Paris (FR)

(56) Documents cités:
- EP-A- 0 603 861
- DE-A- 10 030 362
- FR-A- 2 769 688
- US-A- 4 722 037
- US-A- 5 997 163
- PATENT ABSTRACTS OF JAPAN vol. 1998, no. 14, 31 décembre 1998 (1998-12-31) & JP 10 261303 A (TOYOTA MOTOR CORP), 29 septembre 1998 (1998-09-29)
- PATENT ABSTRACTS OF JAPAN vol. 016, no. 226 (M-1254), 26 mai 1992 (1992-05-26) & JP 04 043501 A (HONDA MOTOR CO LTD), 13 février 1992 (1992-02-13)

## Description

La présente invention concerne un projecteur d'éclairage de véhicule automobile.

La présente invention concerne plus particulièrement un projecteur d'éclairage de véhicule automobile qui est prévu pour réaliser au moins un faisceau d'éclairage principal réglementaire à coupure, notamment du type feu de croisement, comportant, agencés d'arrière en avant globalement suivant un axe optique longitudinal, un réflecteur du type elliptique, une source lumineuse principale qui est agencée au voisinage d'un premier foyer du réflecteur, un cache qui comporte un bord de coupure agencé au voisinage d'un second foyer du réflecteur, de manière à former la coupure dans le faisceau d'éclairage principal produit par le projecteur, un élément optique de répartition qui est agencé devant le cache et une lentille convergente principale dont un plan focal passe au voisinage du second foyer du réflecteur,

Un projecteur du type ci-dessus est décrit dans le document FR-A-2769688. Ce projecteur pour véhicule automobile comprend un réflecteur du genre elliptique, une source lumineuse placée dans une région du premier foyer du réflecteur, une lentille dont le foyer est positionné dans une région du deuxième foyer du réflecteur, un cache interposé entre le réflecteur et la lentille pour réaliser une coupure dans le faisceau lumineux émis et un miroir disposé en avant du cache et exposé de manière à renvoyer des rayons lumineux directs émis par la source lumineuse, sur la face avant dudit cache qui les diffuse en direction de la lentille.

Les véhicules doivent maintenant être équipés de systèmes d'éclairage capables de réaliser de nombreuses fonctions d'éclairage, chacune étant adaptée à des conditions de circulation particulière.

Une difficulté importante, pour l'intégration de toutes ces fonctions d'éclairage dans un véhicule, est l'encombrement des projecteurs d'éclairage qui sont nécessaires pour réaliser toutes ces fonctions. En particulier, il existe un besoin pour augmenter le nombre de fonctions d'éclairage remplies par un projecteur, sans augmenter la surface apparente de ce projecteur dans la face avant du véhicule.

L'invention vise à remédier à cet inconvénient en proposant une solution simple, économique, et efficace.

Dans ce but, l'invention propose un projecteur d'éclairage de véhicule automobile qui est prévu pour réaliser au moins un faisceau d'éclairage principal réglementaire à coupure, notamment du type feu de croisement, comportant, agencés d'arrière en avant globalement suivant un axe optique longitudinal, un réflecteur du type elliptique, une source lumineuse principale qui est agencée au voisinage d'un premier foyer du réflecteur, un cache qui comporte un bord de coupure agencé au voisinage d'un second foyer du réflecteur, de manière à former la coupure dans le faisceau d'éclairage principal produit par le projecteur, un élément optique de répartition qui est agencé devant le cache et une lentille convergente principale dont un plan focal passe au voisinage du second foyer du réflecteur, **caractérisé en ce qu**'il comporte une source lumineuse secondaire agencée entre le cache et la lentille principale, l'élément optique de répartition étant agencé devant le cache de manière à répartir les rayons lumineux émis par la source secondaire sur la surface d'entrée de la lentille principale, en vue de réaliser un faisceau d'éclairage secondaire, la source secondaire étant agencée en dehors du trajet des rayons lumineux provenant de la source principale et dirigés vers la surface d'entrée de la lentille principale, et l'élément optique de répartition comportant un support muni d'un revêtement anisotrope qui diffuse de manière contrôlée l'énergie lumineuse reçue de la source secondaire vers la surface d'entrée de la lentille principale.

Selon d'autres caractéristiques de l'invention :
- l'élément optique de répartition est agencé au voisinage du foyer de la lentille principale ;
- le revêtement anisotrope comporte un réseau de motifs élémentaires de diffusion réalisés en matériau isotrope ;
- l'élément optique de répartition comporte un miroir ;
- l'élément optique de répartition est porté par la face avant du cache ;
- la portion du cache portant l'élément optique de répartition a un profil courbe, dans un plan vertical longitudinal, en vue de répartir les rayons lumineux émis par la source secondaire sur la surface d'entrée de la lentille principale ;
- la source secondaire comporte un élément optique de concentration, de manière à concentrer les rayons lumineux émis par la source secondaire sur l'élément optique de répartition ;
- l'élément optique de concentration comporte une lentille convergente secondaire ;
- l'élément optique de concentration comporte un hologramme ;
- la source secondaire est une diode laser qui réalise un faisceau d'éclairage infrarouge.

D'autres caractéristiques et avantages de l'invention apparaîtront à la lecture de la description détaillée qui suit pour la compréhension de laquelle on se reportera aux dessins annexés parmi lesquels :
- la figure 1 est une vue en coupe axiale qui représente un projecteur conforme aux enseignements de l'invention ;
- la figure 2 est une vue en perspective qui représente schématiquement l'agencement de l'élément optique de répartition par rapport à la source lumineuse secondaire et par rapport à la lentille du projecteur de la figure 1 ;
- la figure 3 est un schéma qui représente le faisceau de croisement et le faisceau infrarouge produits par le projecteur de la figure 1 ;
- la figure 4 est une vue en perspective qui représente schématiquement une variante de réalisation du cache équipant le projecteur de la figure 1 ;
- la figure 5 est une vue en coupe axiale qui représente schématiquement la variante de réalisation de la figure 4.

Dans la suite de la description, des éléments identiques ou similaires sont référencés, dans la mesure du possible, par les mêmes signes de référence.

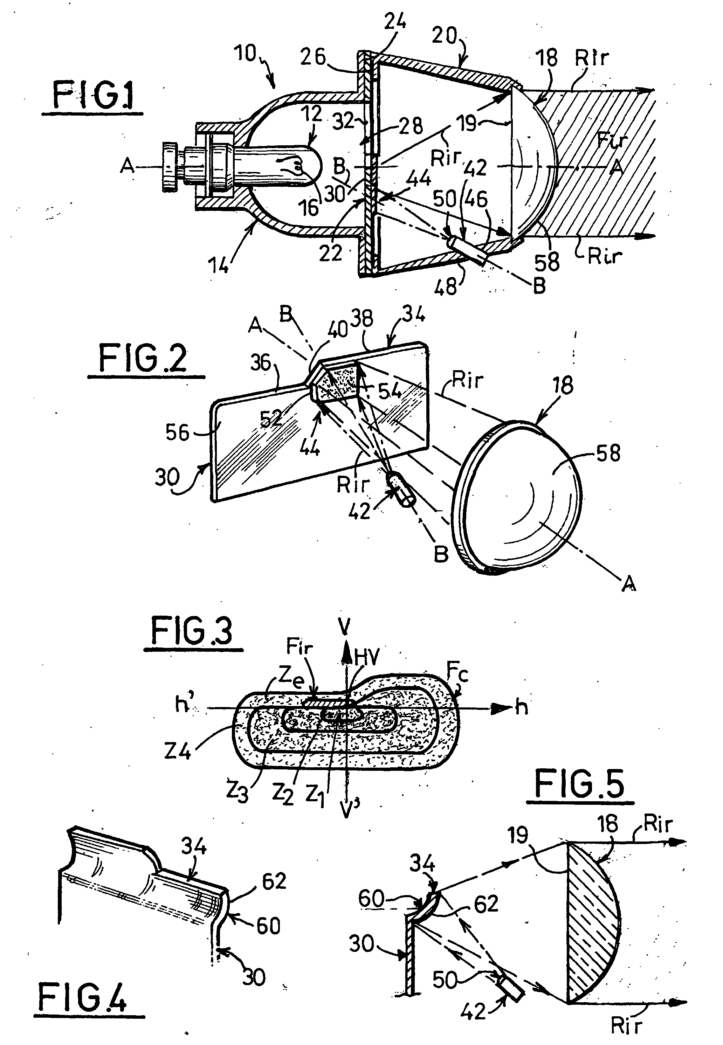

Sur la figure 1, on a représenté un projecteur 10 pour véhicule automobile qui est réalisé conformément aux enseignements de l'invention.

De manière classique, le projecteur 10 comporte une source lumineuse principale, ici sous la forme d'une lampe 12 à filament 16, qui est montée dans le fond d'un réflecteur principal 14 du type elliptique, de telle sorte que le filament 16 de la lampe 12 ou l'arc de la lampe à décharge se situe au voisinage d'un premier foyer F1 du réflecteur 14.

Dans la suite de la description, on utilisera à titre non limitatif une orientation d'arrière en avant, suivant l'axe optique principal A-A du projecteur 10, qui correspond à une orientation de gauche à droite en considérant la figure 1. L'axe optique principal A-A est généralement parallèle à l'axe longitudinal du véhicule que le projecteur 10 équipe.

L'axe optique principal A-A est ici sensiblement horizontal et il peut être défini par exemple par les deux foyers F1, F2 du réflecteur elliptique 14.

On utilisera aussi, à titre non limitatif, une orientation de haut en bas suivant un axe vertical, en considérant la figure 1.

Le projecteur 10 comporte une lentille convergente 18 qui est montée, à l'avant, dans un élément d'ossature 20 du projecteur 10 fixé à l'avant du réflecteur 14.

Le plan focal de la lentille 18 passe au voisinage du second foyer F2 du réflecteur 14.

Dans le mode de réalisation représenté ici, le projecteur 10 est prévu pour produire un faisceau d'éclairage principal réalisant une fonction de feu de croisement F_{c}. Le projecteur 10 comporte à cet effet un dispositif d'occultation, ou cache 22, qui est intercalé axialement entre la surface transversale avant 24 du réflecteur principal 14 et la surface transversale arrière 26 de l'élément d'ossature 20. Le cache 22 est agencé sensiblement dans le plan focal de la lentille principale 18.

Le cache 22 a ici la forme d'une plaque métallique, orientéé globalement transversalement par rapport à l'axe optique principal A-A, qui comporte, dans la moitié inférieure de l'ouverture de sortie 28 du réflecteur 14, une partie occultante 30, et dans la moitié supérieure de l'ouverture de sortie 28 du réflecteur 14, une fenêtre 32 pour le passage des rayons lumineux.

La partie occultante 30 du cache 22 comporte un bord transversal supérieur 34, dit de coupure, qui est agencé au voisinage du second foyer F2 du réflecteur 14.

Le bord de coupure 34 vise à former dans le faisceau d'éclairage principal une limite directionnelle, ou coupure, au-dessus de laquelle l'intensité lumineuse émise est faible.

La partie occultante 30 du cache 22 est représentée schématiquement sur la figure 2.

Dans le mode de réalisation représenté ici, le cache 22 est prévu pour réaliser une fonction d'éclairage réglementaire de feu de croisement. Le bord de coupure 34 comporte donc deux portions horizontales 36, 38, qui sont décalées verticalement, et qui sont reliées par une portion inclinée 40 d'un angle déterminé par rapport aux portions horizontales 36, 38, de sorte que le projecteur 10 réalise un faisceau d'éclairage principal réglementaire de feu de croisement F_{c}.

La figure 3 représente schématiquement la forme du faisceau réglementaire de feu de croisement F_{c} réalisé sur un écran par le projecteur 10.

Conformément aux enseignements de l'invention, le projecteur 10 comporte une source lumineuse secondaire 42 qui est agencée axialement entre le cache 22 et la lentille 18.

Le projecteur 10 comporte aussi un élément optique de répartition 44 qui est agencé devant le cache 22, de manière à répartir les rayons lumineux émis par la source secondaire sur la surface d'entrée 19 de la lentille 18, en vue de réaliser un faisceau d'éclairage secondaire.

Avantageusement, l'élément optique de répartition 44 est agencé au voisinage du foyer F2 de la lentille 18.

Certains véhicules peuvent être équipés d'un projecteur pour la réalisation d'un faisceau d'éclairage infrarouge Fᵢᵣ.

Le faisceau d'éclairage infrarouge Fᵢᵣ est généralement utilisé pour éclairer axialement en avant du faisceau de croisement F_{c} et, combiné avec un capteur de lumière infrarouge (non représenté), pour former une image des obstacles éventuellement détectés, sur un écran de contrôle (non représenté) agencé dans l'habitacle du véhicule.

Il est particulièrement difficile d'intégrer une fonction d'éclairage du type à lumière infrarouge, qui est invisible, dans un véhicule, en raison du danger que représente l'observation des rayons infrarouge par un oeil humain.

Le projecteur 10 selon l'invention est particulièrement avantageux pour la réalisation d'un faisceau d'éclairage Fᵢᵣ du type à lumière infrarouge, le faisceau infrarouge Fᵢᵣ sortant du projecteur 10 par la même surface de sortie qu'un faisceau d'éclairage principal en lumière visible.

A cet effet, la source lumineuse secondaire 42 est avantageusement une diode laser qui est prévue pour réaliser un faisceau d'éclairage secondaire Fᵢᵣ du type infrarouge.

La diode laser 42 est ici agencée dans un logement 46, qui est réalisé dans une partie inférieure 48 de l'élément d'ossature 20.

Avantageusement, la diode laser 42 est agencée en dehors du trajet des rayons lumineux issus de la lampe 12 et passant le cache 22 pour atteindre la surface d'entrée 19 de la lentille 18.

La diode laser 42 comporte ici un élément optique 50 qui est prévu pour diriger les rayons infrarouge émis par la diode laser 42 sur l'élément optique de répartition 44.

L'élément optique 50 est par exemple une lentille convergente, ou un élément optique diffractif tel qu'un hologramme, qui peut être collé sur la diode laser 42.

Les rayons infrarouge Rᵢᵣ sont donc émis, à la sortie de l'élément optique 50, globalement suivant une direction de diffusion lumineuse B-B, qui est inclinée par rapport à l'axe optique principal A-A, et qui est orienté de la diode 42 vers l'élément optique de répartition 44, c'est à dire ici de l'avant vers l'arrière.

Avantageusement, l'élément optique de répartition 44 est un diffuseur anisotrope.

Un diffuseur anisotrope comporte généralement un support revêtu d'un matériau isotrope, par exemple de l'oxyde de magnésium, dans lequel est gravé un réseau de motifs élémentaires de diffusion optique, selon une technique de gravure proche des techniques utilisées dans la microélectronique.

Le diffuseur anisotrope est conçu de manière à renvoyer la lumière qu'il reçoit de manière contrôlée, dans un angle solide de diffusion.

Dans le cadre de la présente invention, le diffuseur anisotrope 44, qui est agencé au voisinage du foyer F2 de la lentille 18, est choisit de manière que son angle solide de diffusion corresponde globalement à l'angle solide de la lentille 18, c'est à dire à l'angle solide définit par le foyer F2 de la lentille 18 et la surface d'entrée 19 de la lentille 18.

Selon le mode de réalisation représenté ici, le diffuseur 44 comporte une plaque de support 52 sensiblement transversale, par rapport à l'axe optique principal A-A, qui est munie sur sa face avant 54 d'un revêtement anisotrope.

Le diffuseur 44 est ici fixé sur la face avant 56 de la partie occultante 30 du cache 22, à proximité de l'axe optique principal A-A, et le diffuseur 44 est sensiblement adjacent au bord de coupure 34 du cache 22.

Le fonctionnement du projecteur 10 selon l'invention est le suivant.

Lorsque la lampe 12 est allumée, le réflecteur 14, le cache 22 et la lentille 18 coopèrent de manière classique pour réaliser, à partir des rayons lumineux émis par le filament 16, un faisceau réglementaire de croisement F_{c}.

Les rayons lumineux formant le faisceau de croisement F_{c} sortent du projecteur 10 par la surface de sortie 58, ou surface avant, de la lentille 18.

L'éclairement produit par un faisceau de croisement F_{c} sur un écran placé à environ vingt-cinq mètres à l'avant du projecteur 10 est représenté sur la figure 3, dans le cas d'une circulation automobile à droite sur la chaussée.

A titre d'exemple, on a représenté sur la figure quatre zones Z1, Z2, Z3, Z4 qui ont respectivement une intensité lumineuse moyenne croissante, depuis le point HV, représentant l'intersection de l'axe horizontal h'h avec l'axe vertical v'v, vers un côté de l'axe horizontal h'h.

Globalement, le faisceau de croisement F_{c} est délimité verticalement vers le haut par sa coupure qui suit l'axe horizontal h'h, de la gauche vers la droite jusqu'au point HV, puis qui est inclinée vers le haut, par rapport à l'axe horizontal h'h, d'un angle d'environ quinze degrés.

Cependant, on constate que la zone d'intensité la plus faible Z4 du faisceau de croisement F_{c} comporte une portion Ze, ou zone d'éblouissements, située au-dessus de la coupure.

Cette zone d'éblouissements Ze correspond aux rayons lumineux qui sont émis au-dessus de la coupure, et qui sont la source d'éblouissements pour les conducteurs de véhicule circulant en sens inverse. Cette zone d'éblouissements Ze, de faible intensité lumineuse, est imposée par la réglementation en vue de permettre une transition progressive entre les zones non éclairées par le faisceau de croisement F_{c} et la coupure sous laquelle l'intensité lumineuse est maximale, et également en vue de permettre l'observation de la signalisation routière située au dessus de la chaussée, par exemple au dessus d'une autoroute.

Lorsque la diode laser 42 est allumée, elle émet des rayons infrarouge Rᵢᵣ qui sont dirigés par l'optique 50 sur la face avant 54 du diffuseur 44.

Le diffuseur 44 renvoie les rayons infrarouge Rᵢᵣ sur la surface d'entrée 19 de la lentille 18.

Globalement, pour la lentille 18, les rayons infrarouge Rᵢᵣ proviennent d'une source lumineuse virtuelle située au voisinage de son foyer F2, de sorte que les rayons infrarouge Rᵢᵣ sont déviés par la lentille 18 de manière à sortir par la surface de sortie 58 suivant des directions sensiblement parallèles à l'axe optique principal A-A au dessus de la coupure.

Avantageusement, la diode laser 42 est allumée en même temps que la lampe 12, et le faisceau infrarouge Fᵢᵣ, qui est représenté schématiquement sur la figure 3, est émis dans la zone d'éblouissements Ze du faisceau de croisement F_{c}. Ce positionnement du faisceau infrarouge Fᵢᵣ permet d'éviter aux conducteurs de véhicule circulant en sens inverse de regarder directement le faisceau infrarouge Fᵢᵣ, en raison du réflexe pupillaire provoqué chez eux par les rayons lumineux visibles émis dans la zone d'éblouissements Ze par la lampe 12.

Le projecteur 10 selon l'invention permet donc de diminuer le risque qu'une personne observe directement le faisceau lumineux infrarouge, sans protection, puisque la source infrarouge 42 est isolée de l'extérieur par la lentille 18, et par l'optique 50.

De plus, le faisceau infrarouge Fᵢᵣ sort du projecteur 10 par une surface 58 qui a une aire importante, par rapport à la taille de la source secondaire 42, ce qui assure une valeur de luminance peu élevée, par rapport à un projecteur de lumière infrarouge ayant une surface de sortie d'aire réduite.

Comme la surface de sortie 58 du projecteur 10 est « éclairante » en lumière visible, par l'intermédiaire du faisceau de croisement F_{c}, le projecteur 10 selon l'invention permet de diminuer les risques qu'une personne regarde dans l'axe A-A du faisceau infrarouge Fᵢᵣ, vers sa source 42.

Un autre avantage de l'invention est qu'elle permet l'intégration d'une fonction d'éclairage supplémentaire dans le projecteur 10, globalement sans augmenter l'encombrement du projecteur 10, ce qui facilite l'intégration du projecteur 10 dans un véhicule. En particulier, l'intégration de la fonction d'éclairage supplémentaire dans le projecteur 10 n'augmente pas la surface apparente du projecteur 10.

De plus, dans le cas où le projecteur 10 est équipé d'un système de correction de portée (non représenté) pour le faisceau de croisement F_{c}, le faisceau d'éclairage secondaire Fᵢᵣ en bénéficie lui aussi.

Puisque le système de correction de portée garantit un positionnement vertical stable du faisceau infrarouge Fᵢᵣ, il n'est pas nécessaire d'étaler verticalement l'énergie lumineuse infrarouge dans le faisceau Fᵢᵣ, ce qui améliore le rendement énergétique de la fonction d'éclairage infrarouge.

Sur les figures 4 et 5 on a représenté une variante de réalisation de l'invention, dans laquelle un tronçon supérieur 60 de la partie occultante 30 du cache 22 comporte un profil courbe, dans une projection sur un plan axial vertical, qui est convexe axialement vers l'avant.

L'élément optique de répartition 44, qui est porté par La surface avant 62 du tronçon supérieur 60, comporte par exemple un revêtement réfléchissant formant miroir, et le profil de l'arc de cercle du tronçon supérieur 60 est défini de manière que les rayons lumineux Rᵢᵣ qu'il reçoit de la source secondaire 42 se répartissent globalement sur au moins une partie de la surface d'entrée 19 de la lentille 18.

On note que le profil du tronçon supérieur 60, dans une projection axiale sur un plan transversal vertical, est similaire au profil correspondant du cache 22 selon le mode de réalisation décrit précédemment, de sorte que le bord de coupure 34 délimite toujours une coupure adéquate dans le faisceau de croisement F_{c}. En particulier, le bord de coupure 34 doit être agencé axialement au voisinage du second foyer F2 du réflecteur elliptique 14, le tronçon inférieur de la partie occultante 30 étant agencé ici axialement en arrière, par rapport au second foyer F2.

L'invention a été décrite en référence à un projecteur 10 réalisant un faisceau de croisement F_{c} et un faisceau infrarouge Fᵢᵣ. Bien entendu, sans sortir du domaine couvert par l'invention, le projecteur 10 peut être prévu pour réaliser un autre type de faisceau d'éclairage principal à coupure, par exemple un faisceau antibrouillard, et un autre type de faisceau d'éclairage secondaire, par exemple un faisceau de feu de position. De même, l'invention s'applique à un projecteur émettant deux types de faisceaux, un faisceau de croisement ainsi qu'on l'a décrit, et un faisceau de route, obtenu par basculement du cache réalisant la coupure, le faisceau infrarouge n'étant émis que lorsque le cache est dans la position de faisceau de croisement. L'invention s'applique aussi à des projecteurs émettant plus de deux faisceaux en utilisant au moins un écran d'occultation, comme on l'a décrit par exemple dans le document FR-A-2 815 310.

## Revendications

1. Projecteur d'éclairage (10) de véhicule automobile qui est prévu pour réaliser au moins un faisceau d'éclairage réglementaire à coupure, notamment du type feu de croisement (F_{c}), comportant, agencés d'arrière en avant globalement suivant un axe optique longitudinal (A-A), un réflecteur (14) du type elliptique, une source lumineuse principale (16) qui est agencée au voisinage d'un premier foyer (F1) du réflecteur (14), un cache (22) qui comporte un bord de coupure (34) agencé au voisinage d'un second foyer (F2) du réflecteur (14), de manière à former la coupure dans le faisceau d'éclairage (F_{c}) produit par le projecteur (10), un élément optique de répartition (44) qui est agencé devant le cache (22) et une lentille convergente principale (18) dont un plan focal passe au voisinage du second foyer (F2) du réflecteur (14),
**caractérisé en ce qu'**il comporte une source lumineuse secondaire (42) agencée entre le cache (22) et la lentille principale (18), l'élément optique de répartition (44) étant agencé devant le cache (22), de manière à répartir les rayons lumineux (Rᵢᵣ) émis par la source secondaire (42) sur la surface d'entrée (19) de la lentille principale (18), en vue de réaliser un faisceau d'éclairage secondaire (Fᵢᵣ), la source secondaire (42) étant agencée en dehors du trajet des rayons lumineux provenant de la source principale (16) et dirigés vers la surface d'entrée (19) de la lentille principale (18), et l'élément optique de répartition (44) comportant un support (52) muni d'un revêtement anisotrope (54) qui diffuse de manière contrôlée l'énergie lumineuse reçue de la source secondaire (42) vers la surface d'entrée (19) de la lentille principale (18).

2. Projecteur (10) selon la revendication précédente, **caractérisé en ce que** l'élément optique de répartition (44) est agencé au voisinage du foyer (F2) de la lentille principale (18).

3. Projecteur (10) selon la revendication 1 ou 2, **caractérisé en ce que** le revêtement anisotrope (54) comporte un réseau de motifs élémentaires de diffusion réalisés en matériau isotrope.

4. Projecteur (10) selon la revendication 1 ou 2, **caractérisé en ce que** l'élément optique de répartition (62) comporte un miroir.

5. Projecteur (10) selon l'une quelconque des revendications précédentes, **caractérisé en ce que** l'élément optique de répartition (44) est porté par la face avant (56) du cache (22).

6. Projecteur (10) selon la revendication précédente, **caractérisé en ce que** la portion (60) du cache (22) portant l'élément optique de répartition (44) a un profil courbe, dans un plan vertical longitudinal, en vue de répartir les rayons lumineux (Rᵢᵣ) émis par la source secondaire (42) sur la surface d'entrée (19) de la lentille principale (18).

7. Projecteur (10) selon l'une quelconque des revendications précédentes, **caractérisé en ce que** la source secondaire (42) comporte un élément optique (50), de manière à diriger les rayons lumineux (Rᵢᵣ) émis par la source secondaire (42) sur l'élément optique de répartition (44).

8. Projecteur (10) selon la revendication précédente, **caractérisé en ce que** l'élément optique (50) comporte une lentille convergente secondaire.

9. Projecteur (10) selon la revendication 7, **caractérisé en ce que** l'élément optique (50) comporte un élément optique diffractif.

10. Projecteur (10) selon la revendication 9, **caractérisé en ce que** l'élément optique (50) comporte un hologramme.

11. Projecteur (10) selon l'une quelconque des revendications précédentes, **caractérisé en ce que** la source secondaire (42) est une diode laser qui réalise un faisceau d'éclairage infrarouge (Fᵢᵣ).

## Patentansprüche

1. Scheinwerfer (10) für Kraftfahrzeuge, der zum Ausführen wenigstens eines vorschriftsmäßigen Lichtbündels mit Hell-Dunkel-Grenze, insbesondere in der Art eines Abblendlichts (F_{c}), vorgesehen ist und allgemein entlang einer optischen Längsachse (A-A) von hinten nach vorne angeordnet aufweist: einen Ellipsoid-Reflektor (14), eine Hauptlichtquelle (16), die in der Nähe eines ersten Brennpunkts (F1) des Reflektors (14) angeordnet ist, eine Abdeckkappe (22) mit einem Begrenzungsrand (34), der in der Nähe eines zweiten Brennpunkts (F2) des Reflektors (14) derart angeordnet ist, dass die Hell-Dunkel-Grenze in dem von dem Scheinwerfer erzeugten Lichtbündel (F_{c}) gebildet wird, ein optisches Lichtverteilungselement (44), das vor der Abdeckkappe (22) angeordnet ist, und eine Hauptsammellinse (18), deren eine Brennebene in der Nähe des zweiten Brennpunkts (F2) des Reflektors (14) verläuft,
**dadurch gekennzeichnet, dass** er eine Sekundärlichtquelle (42) umfasst, die zwischen der Abdeckkappe (22) und der Hauptlinse (18) angeordnet ist, wobei das optische Lichtverteilungselement (44) vor der Abdeckkappe (22) derart angeordnet ist, dass die von der Sekundärlichtquelle (42) ausgesandten Lichtstrahlen (Rᵢᵣ) auf der Eintrittsfläche (19) der Hauptlinse (18) verteilt werden, um ein Sekundärlichtbündel (Fᵢᵣ) zu erzeugen, wobei die Sekundärlichtquelle (42) außerhalb des Strahlengangs der Lichtstrahlen angeordnet ist, die von der Hauptlichtquelle (16) herrühren und zu der Eintrittsfläche (19) der Hauptlinse (18) gelenkt werden, und wobei das optische Lichtverteilungselement (44) einen Halter (52) aufweist, der mit einer anisotropen Beschichtung (54) versehen ist, die in kontrollierter Weise die von der Sekundärüchtquelle (42) erhaltene Lichtmenge zu der Eintrittsfläche (19) der Hauptlinse (18) streut.

2. Scheinwerfer (10) nach dem vorhergehenden Anspruch,
**dadurch gekennzeichnet, dass** das optische Lichtverteilungselement (44) in der Nähe des Brennpunkts (F2) der Hauptlinse (18) angeordnet ist.

3. Scheinwerfer (10) nach Anspruch 1 oder 2,
**dadurch gekennzeichnet, dass** die anisotrope Beschichtung (54) ein Netz mit Streugrundmustern aufweist, die aus einem isotropen Material gefertigt sind.

4. Scheinwerfer (10) nach Anspruch 1 oder 2,
**dadurch gekennzeichnet, dass** das optische Lichtverteilungselement (62) einen Reflektor aufweist.

5. Scheinwerfer (10) nach einem der vorhergehenden Ansprüche,
**dadurch gekennzeichnet, dass** das optische Lichtverteilungselement (44) von der Vorderseite (56) der Abdeckkappe (22) gehalten ist.

6. Scheinwerfer (10) nach dem vorhergehenden Anspruch,
**dadurch gekennzeichnet, dass** der Teil (60) der Abdeckkappe (22), der das optische Lichtverteilungselement (44) trägt, in einer senkrechten Längsebene ein gekrümmtes Profil hat, um die von der Sekundärlichtquelle (42) ausgesandten Lichtstrahlen (Rᵢᵣ) auf die Eintrittsfläche (19) der Hauptlinse (18) zu verteilen.

7. Scheinwerfer (10) nach einem der vorhergehenden Ansprüche,
**dadurch gekennzeichnet, dass** die Sekundärlichtquelle (42) ein optisches Element (50) aufweist, um die von der Sekundärlichtquelle (42) ausgesandten Lichtstrahlen (Rᵢᵣ) zu dem optischen Lichtverteilungselement (44) zu lenken.

8. Scheinwerfer (10) nach dem vorhergehenden Anspruch,
**dadurch gekennzeichnet, dass** das optische Element (50) eine Sekundärsammellinse umfasst.

9. Scheinwerfer (10) nach Anspruch 7,
**dadurch gekennzeichnet, dass** das optische Element (50) ein optisches Lichtbeugungselement umfasst.

10. Scheinwerfer (10) nach Anspruch 9,
**dadurch gekennzeichnet, dass** das optische Element (50) ein Hologramm umfasst.

11. Scheinwerfer (10) nach einem der vorhergehenden Ansprüche,
**dadurch gekennzeichnet, dass** die Sekundärlichtquelle (42) eine Laserdiode ist, die ein Infrarotlichtbündel (Fᵢᵣ) erzeugt.

## Claims

1. Motor vehicle headlight (10) that is designed to produce at least one regulatory lighting beam with cutoff, in particular of the dipped beam type (F_{c}), comprising, arranged from rear to front roughly along a longitudinal optical access (A-A), a reflector (14) of the elliptical type, a main light source (16) arranged in the vicinity of a first focus (F1) of the reflector (14), a shield (22) that comprises a cutoff edge (34) arranged in the vicinity of a second focus (F2) of the reflector (14), so as to form the cutoff in the lighting beam (F_{c}) produced by the headlight (10), an optical distribution element (44) arranged in front of the shield (22) and a main convergent lens (14), a focal plane of which passes close to the second focus (F2) of the reflector (14),
**characterised in that** it comprises a secondary light source (42) arranged between the shield (22) and the main lens (18), the optical distribution element (44) being arranged in front of the shield (22) so as to distribute the light rays (Rᵢᵣ) emitted by the secondary source (42) on the entry surface (19) of the main lens (18), with a view to producing a secondary lighting beam (Fᵢᵣ), the secondary source (42) being arranged outside the path of the light rays coming from the main source (16) and directed towards the entry surface (19) of the main lens (18), with a view to producing a secondary lighting beam (Fᵢᵣ), the secondary source (42) being arranged outside the path of the light rays coming from the main source (16) and directed towards the entry surface (19) of the main lens (18), and the optical distribution element (44) comprising a support (52) provided with an anisotropic coating (54) that in a controlled manner diffuses the light energy received from the secondary source (42) towards the entry surface (19) of the main lens (18).

2. Headlight (10) according to the preceding claim, **characterised in that** the optical distribution element (44) is arranged close to the focus (F2) of the main lens (18).

3. Headlight (10) according to claim 1 or 2, **characterised in that** the anisotropic coating (54) comprises a grating of elementary diffusing patterns produced from isotropic material.

4. Headlight (10) according to claim 1 or 2, **characterised in that** the optical distribution element (62) comprises a mirror.

5. Headlight (10) according to any one of the preceding claims, **characterised in that** the optical distribution element (44) is carried by the front face (56) of the shield (22).

6. Headlight (10) according to the preceding claim, **characterised in that** the portion (60) of the shield (22) carrying the optical distribution element (44) has a curved profile, in a vertical longitudinal plane, with a view to distributing the light rays (Rᵢᵣ) emitted by the secondary source (42) on the entry surface (19) of the main lens (18).

7. Headlight (10) according to any one of the preceding claims, **characterised in that** the secondary source (42) comprises an optical element (50), so as to direct the light rays (Rᵢᵣ) emitted by the secondary source (42) onto the optical distribution element (44).

8. Headlight (10) according to the preceding claim, **characterised in that** the optical element (50) comprises a secondary convergent lens.

9. Headlight (10) according to claim 7, **characterised in that** the optical element (50) comprises a diffractive optical element.

10. Headlight (10) according to claim 9, **characterised in that** the optical element (50) comprises a hologram.

11. Headlight (10) according to any one of the preceding claims, **characterised in that** the secondary source (42) is a laser diode producing an infrared lighting beam (Fᵢᵣ).
